# EUROPEAN PATENT APPLICATION

(11) **EP 1 049 310 A1**
(43) Date of publication of application: **02.11.2000**
(21) Application number: 99830251.7
(22) Date of filing: 28.04.1999
(51) Int. Cl.: H04M 1/05

(54) **Accessory for hansfree use of a mobile telephone**

(71) Applicant: De Pol, Andrea, 32100 Belluno (IT); Da Rin De Nicolo' Libero, 32040 Pelos di Cadore (IT)
(72) Inventor: De Pol, Andrea, 32100 Belluno (IT); Da Rin De Nicolo' Libero, 32040 Pelos di Cadore (IT)
(74) Representative: Pezzoli, Ennio

(57) **Abstract**

Accessory (106) for a mobile telephone (103) comprising a microphone (127), an earpiece (130), and means (131) for connecting the microphone (127) and the earpiece (130) to the mobile telephone (103), in which the accessory (106) includes means (160, 157i, 157e) for associating the microphone (127), the earpiece (130) and the connecting means (131) with a frame for glasses (139).

## Description

The present invention relates to an accessory for a mobile telephone.

Mobile telephones, such as cellular telephones, are commonly used both for work and for private purposes. Various accessories for mobile telephones have been proposed in recent years with the aim of making them more convenient to use.

One particular type of accessory for a mobile telephone consists of a microphone and an earpiece, which are connected to the mobile telephone by means of a suitable connecting cable. The earpiece is inserted into a user's ear, while the microphone is suspended around his neck. This accessory enables the user to make a telephone call with his hands free, without the necessity of holding the mobile telephone. This also avoids the need to carry the mobile telephone near the user's head, thus reducing any harmful effects of the electromagnetic waves generated by the mobile telephone.

A disadvantage of the known accessory described above consists in the fact that it is inconvenient to use. In particular, the positioning of the accessory requires rather slow and laborious operations. The user is also obliged to keep the earpiece inserted in his ear at all times (to avoid wasting too much time in finding it in case of a call), which may interfere with the hearing.

When the user is moving (when he is walking, for example), the microphone is subject to continual displacements, which may compromise the quality of the telephone call. Moreover, it is very easy for the earpiece to drop out of the ear, which is particularly troublesome if a telephone call is in progress.

The object of the present invention is to overcome the aforesaid drawbacks. To achieve this object, an accessory for a mobile telephone as described in the first claim is proposed.

To summarize, it is provided an accessory for a mobile telephone comprising a microphone, an earpiece, and means for connecting the microphone and earpiece to the mobile telephone, in which the accessory is provided with means of associating the microphone, the earpiece and the connecting means with a frame for glasses.

A corresponding frame and glasses comprising this frame are also proposed.

Further characteristics and the advantages of the accessory for a mobile telephone according to the present invention will be made clear by the following description of a preferred embodiment of the invention, provided for guidance only and without restriction, with reference to the attached figures, in which
Figs. 1a and 1b show a system in which the accessory according to the present invention can be used, shown in an inactive condition and in an operating condition respectively;
Fig. 2 shows a different embodiment of the accessory.

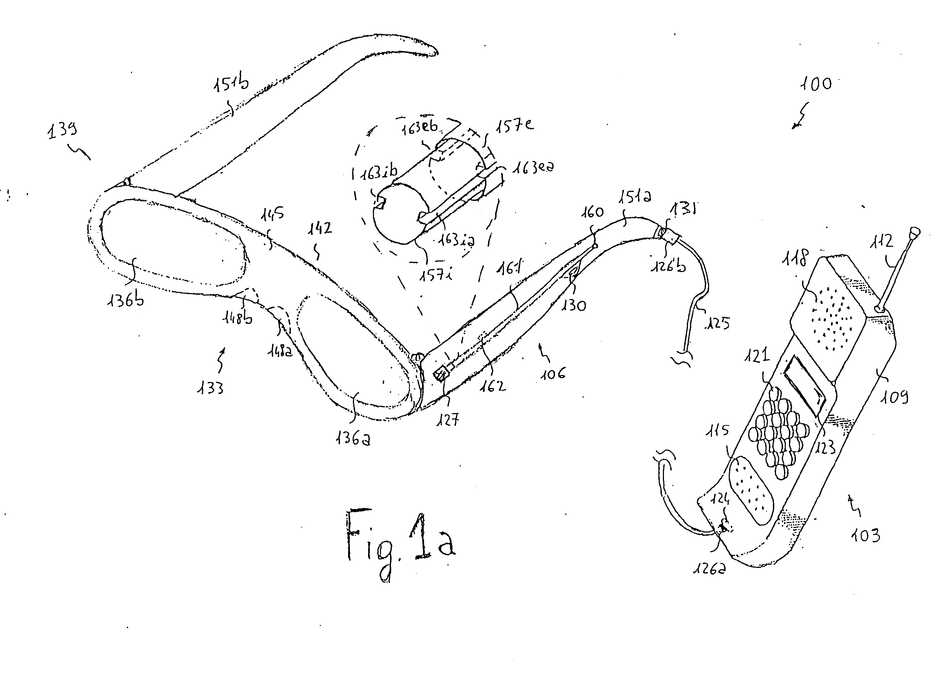

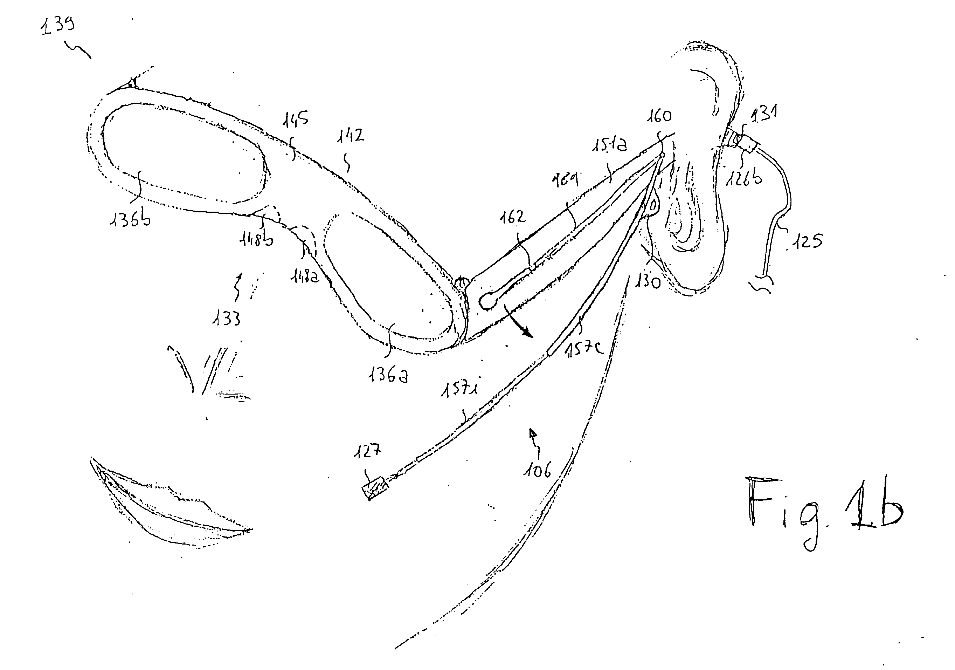

With reference to Fig. 1a in particular, a mobile telephone system 100 consisting of a cellular telephone 103 and a corresponding accessory 106 is shown. The cellular telephone 103 (of the GSM type) consists of a casing 109 (typically made from plastic material), from which an antenna 112 projects upwards. The cellular telephone 103 is provided with a receiver 115 and a transmitter 118 located in an upper and a lower position respectively; the receiver 115 and the transmitter 118 convert an acoustic signal into a corresponding electrical signal, and vice versa, for making a telephone call. A keypad 121, used to dial a telephone number to be called, compose a message to be sent, or to control various menus of commands, is placed between the receiver 115 and the transmitter 118. Above the keypad 121 there is a display 123, which shows the telephone number called, the messages sent and received, the texts of the menus, and other service information.

A connector 124 is located on the bottom of the casing 109. A cable 125 (with four wires) is used to connect the cellular telephone 103 to the accessory 106. In particular, the connecting cable 125 terminates in two plugs 126a and 126b; the plug 126a is inserted into the connector 124, while the plug 126b is connected (as described below) to the accessory 106.

The accessory 106 comprises a microphone 127 and an earpiece 130. The microphone 127 is an electroacoustic transducer (of the piezoelectric type, for example) which converts an acoustic signal from a user's mouth into a corresponding electrical signal; conversely, the earpiece 130 is an electroacoustic transducer which converts an electrical signal into a corresponding acoustic signal, which is sent to the user's ear. The accessory 106 also includes a connector 131, connected electrically to the microphone 127 and to the earpiece 130, into which the plug 126b is inserted. The microphone 127 and the earpiece 130, when connected to the cellular telephone 103, replace the receiver 115 and the transmitter 118 for making the telephone call.

The figure also shows a pair of sunglasses 133. The glasses 133 are provided with two protective lenses 136a and 136b supported by a frame 139 made from plastic material. The frame 139 includes a front 142 consisting of two supporting rings for the lenses 136a and 136b, joined together by a bridge 145. Two wings 148a and 148b extend from a lower edge of the bridge 145 towards the interior of the frame 139, to form a support for the frame 139 on the user's nose. Two sides 151a and 151b, which have slightly convex outer surfaces, are hinged to corresponding lateral edges of the front 142. The sides 151a, 151b extend perpendicular to the front 142 and terminate in free ends bent downwards in such a way that, when the sides 151a, 151b are supported on the user's ears, they impart lateral stability to the frame 139 and prevent the front 142 from sliding forwards on the user's nose. When the glasses 133 are not in use, however, the sides 151a, 151b are folded on to the front 142, to enable the glasses 133 to be put in a case (not shown in the figure).

Similar considerations are applicable in the case in which the telephone is of a different type, for example TACS or satellite, has a different structure, or has a flip-open keypad cover in which the microphone is provided, or more generally when any mobile telephone is used. Alternatively, the connector of the accessory may be replaced by a transceiver for connecting the microphone and earpiece to the cellular telephone by means of radio waves, or other equivalent connecting means may be provided. Similarly, it is possible to use glasses of a different type, for example corrective glasses, glasses with frames made from metal (and sides consisting of straight bars with supporting end pieces), glasses with a single lens of elongate shape, glasses with the sides connected directly to the lenses (without the front), and similar.

In the accessory according to the present invention, means (described in detail below) are provided to associate the microphone 127, the earpiece 130 and the connector 131 with the frame 139.

The accessory produced in this way is particularly practical and convenient to use. This is because, once the microphone and earpiece have been associated with the frame, the positioning of the accessory is immediate and requires a simple habitual movement consisting in putting on the glasses.

Furthermore, the microphone is kept in a fixed position with respect to the user's mouth, and is therefore more efficient and ensures a better quality of the telephone call by significantly reducing any background noise. This solution does not require the insertion of the earpiece into the ear (although this possibility is not excluded), and the accessory is therefore very convenient to use, especially when the user is moving.

Preferably, the microphone 127, the earpiece 130 and the connector 131 are associated with one side of the frame 139, for example the side 151a (although a different arrangement is not excluded) . Thus the accessory does not interfere with the normal use of the glasses; moreover, this position is very practical.

In the embodiment shown in the figure, the microphone 127, the earpiece 130 and the connector 131 are incorporated in the frame 139. This solution is particularly compact, secure and effective. Moreover, it enables an aesthetic effect of considerable attractiveness to be obtained.

In particular, the connector 131 is fixed to the free end of the side 151a. The frame 139 also includes a supporting element in the form of a telescopic structure (slightly curved), consisting of an inner tubular element 157i which is pushed with a small amount of friction into an outer tubular element 157e. The supporting element 157i, 157e is hinged to the side 151a; in particular, a free end of the outer element 157e is joined to a hinge 160, located near the free end of the side 151a. The microphone 127 is fixed to a free end of the inner element 157i. The earpiece 130 is located on the outer element 157e, a few centimetres from the hinge 160, and is connected electrically to the connector 131 by means of a pair of wires (not shown in the figure). A groove which forms a housing 161 to receive the supporting element 157i, 157e and the microphone 127 is formed along the side 151a. A microswitch 162 projects from a lower surface of the housing 161.

The inner element 157i has a circular cross section, which has two rectilinear depressions (with C-shaped cross sections) which form two longitudinal channels 163ia and 163ib on its outer surface. Similarly, the outer element 157e has a circular cross section (whose diameter is greater than that of the inner element 157i) with two rectilinear depressions which form, on its inner surface, two rails 163ea and 163eb matching the corresponding channels 163ia and 163ib. The rails 163ea and 163eb interact with the channels 163ia and 163ib, acting as a guide for the sliding of the inner element 163i in the outer element 163e. Metal tracks (made from copper, for example) are provided on a lower surface of each of the channels 163ia, 163ib and on an end surface of each of the rails 163ea, 163eb, and are connected to the microphone 127 and to the connector 131 respectively. These metal tracks form a sliding contact which electrically connects the microphone 127 to the connector 131.

In an inactive condition shown in the figure, the inner element 157i is pushed into the outer element 157e. The supporting element 157i, 157e (with the microphone 127) is adjacent to the side 151a and is placed in the housing 161, in such a way that it projects slightly from the outer surface of the side 151a. The supporting element 157i, 157e pushes the microswitch 162 inwards in such a way as to keep it in an open state.

During a telephone call, as shown in Fig. 1b, the supporting element 157i, 157e is extracted by gently pushing from the housing 161, and is rotated downwards, for example through an angle ranging from 30° to 60°. The inner element 157i is then pulled out of the outer element 157e by holding the microphone 127 and pulling it forwards. In this operating condition, the microphone 127 and the earpiece 130 are located near the user's mouth and ear respectively. At the same time, the movement of the supporting element 157i, 157e releases the microswitch 162, which moves to a closed condition. The closing of the microswitch 162 causes a call accept signal to be sent to the cellular telephone.

The supporting element 157i, 157e hinged to the side 151a make the use of the accessory 106 highly practical. This is because, in the inactive condition, the accessory 106 becomes practically invisible, interfering in a very limited way with the aesthetic appearance of the glasses 133; at the same time, it is only necessary to carry out a simple movement to bring the microphone 127 close to the user's mouth during the telephone call.

The telescopic structure of the supporting element 157i, 157e is particularly compact and simple. This also makes it possible to bring the microphone 127 into an optimal position with respect to the user's mouth, ensuring a high quality of the acoustic signal received by the microphone 127.

The particular arrangement of the earpiece 130 enables it to be brought very close to the user's ear during the telephone call. At the same time, the earpiece 130 is located near the side 151a and is not inserted in the user's ear in the inactive condition, and therefore does not interfere with the ear when the cellular telephone is not in use.

The microswitch 162 makes the use of the cellular telephone very practical. This is because this element makes it possible to accept a call simply by moving the supporting element 157i, 157e, without any need to act on the cellular telephone; the call can thus be answered very quickly, without any additional movement apart from that which in any case is necessary to bring the microphone 127 close to the user's mouth.

Similar considerations are applicable in cases in which the inner element and the outer element have a different cross section, the microphone and the earpiece are connected in a different way to the connector, the supporting element is hinged near the front of the frame, the earpiece is joined to the supporting element in a different way, other equivalent means are provided for accepting the call, and the like. However, the accessory according to the present invention can also be made with the microphone and the earpiece arranged in a different way, with the supporting element not in the form of a telescopic structure, with the earpiece fixed to the side of the frame, or without any microswitch.

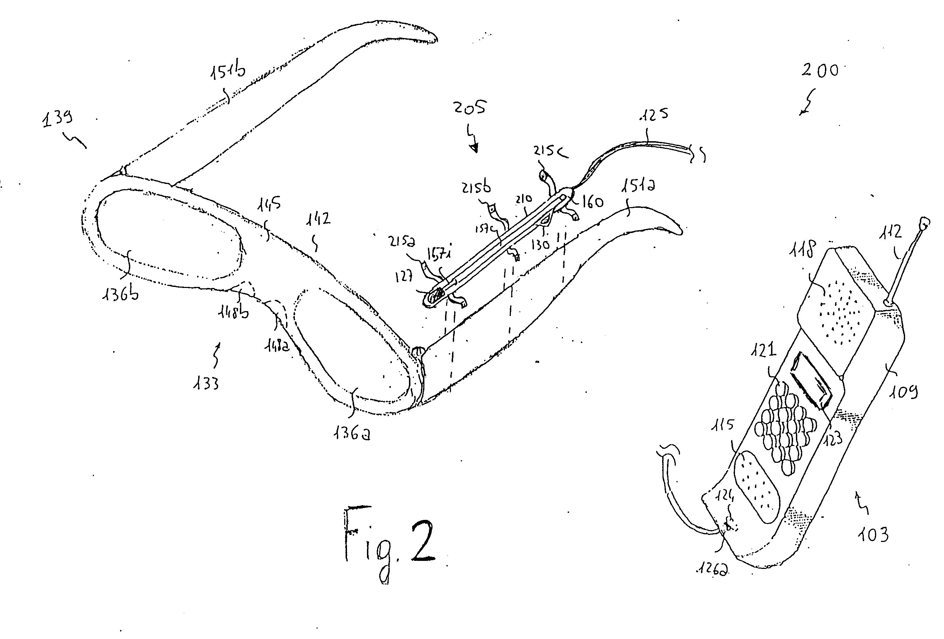

Alternatively, as shown in Fig. 2 (elements structurally and functionally similar to those shown in the preceding figures are identified by the same reference numbers, and their explanation is omitted for the sake of simplicity of the description), an accessory for a cellular telephone 205 is provided, comprising a base plate 210, made for example from plastic material. The supporting element 157i, 157e is hinged to the base plate 210 (near its rear end) and the connecting cable 125 is fixed permanently to the plate (without any connector).

The base plate is provided with three straps 215a, 215b and 215c for fixing the base plate 210 to the side 151a; each fixing strap 215a-215c is provided with a Velcro fastening consisting of two strips located near a corresponding flap of the fixing strap 215a-215c.

In an operating condition, the base plate 210 is adjacent to the outer surface of the side 151a. The fixing straps 215a-215c are wrapped around the side 151a; the overlapping flaps of the fixing straps 215a-215c are joined together by pressure, using the corresponding Velcro fastening, in such a way as to secure the base plate 210 to the side 151a. The same operations are carried out in reverse order to remove the accessory 205 from the side 151a.

Similar considerations are applicable in cases in which the base plate is replaced by another element, elastic clips are used to snap-fit the accessory to the side, or, more generally, other equivalent means are provided for joining the microphone 127 and the earpiece 130 (and the connecting cable 125) to the frame 139 in a removable way.

The embodiment of the present invention described above is particularly economical. This is because this accessory can be mass-produced at very low cost and is suitable for existing glasses without requiring any modification. Moreover, the accessory can be used from time to time on a plurality of glasses, even if these are of different types.

Clearly, the accessory for a mobile telephone described above may be modified and varied in many ways by a person skilled in the art, in order to meet contingent and specific requirements, all such modifications and variations being contained within the scope of protection of the invention, as defined by the following claims.

## Claims

1. Accessory (106) for a mobile telephone (103) comprising a microphone (127), an earpiece (130), means (131) for connecting the microphone (127) and the earpiece (130) to the mobile telephone (103),
characterized in that it includes means (160, 157i, 157e) for associating the microphone (127), the earpiece (130) and the connecting means (131) with a frame for glasses (139).

2. Accessory (106) according to Claim 1, in which the microphone (127), the earpiece (130) and the connecting means (131) are associated with a side (151a) of the frame (139).

3. Accessory (106) according to Claim 1 or 2, in which the microphone (127), the earpiece (130) and the connecting means (131) are incorporated in the frame (139).

4. Accessory (106) according to Claim 3, comprising a supporting element (157i, 157e) hinged to the side (151a), the microphone (127) being located on a free end of the supporting element (157i, 157e), in which the supporting element (157i, 157e) is movable between an inactive position in which it is adjacent to the side (151a) and an operating position in which the microphone (127) is moved away from the side (151a) and positioned near the mouth of a user of the accessory (106).

5. Accessory (106) according to Claim 4, in which the supporting element (157i, 157e) is hinged near a free end of the side (151a), the supporting element (157i, 157e) having a telescopic structure to bring the microphone (127) close to the mouth when the supporting element (157i, 157e) is in the operating position.

6. Accessory (106) according to Claim 4 or 5, in which the earpiece (130) is joined to the supporting element (157i, 157e) in such a way that it is located near the side (151a) when the supporting element (157i, 157e) is in the inactive position and in such a way that it is located near the user's ear when the supporting element (157i, 157e) is in the operating position.

7. Accessory (106) according to any one of Claims 4 to 6, further comprising means (162) for making the mobile telephone (103) accept a call when the supporting element (157i, 157e) is moved from the inactive position to the operating position.

8. Accessory (205) according to Claim 1 or 2, comprising means (215a-215c) for connecting the microphone (127), the earpiece (130) and the connecting means (125) to the frame (139) in a removable way.

9. Frame for glasses (139) comprising a microphone (127), an earpiece (130) and means (131) for connecting the microphone (127) and the earpiece (130) to a mobile telephone (103).

10. Glasses (133) comprising the frame (139) according to Claim 9.
